# EUROPEAN PATENT APPLICATION

(11) **EP 4 287 422 A1**
(43) Date of publication of application: **06.12.2023**
(21) Application number: 22176289.1
(22) Date of filing: 31.05.2022
(51) Int. Cl.: H01S 3/00, G02F 1/11

(54) **PULSED LASER SYSTEM**

(71) Applicant: NKT Photonics A/S, 3460 Birkerød (DK)
(72) Inventor: ANDERSEN, Thomas Vestergaard, 3460 Birkerød (DK)
(74) Representative: Zacco Denmark A/S

(57) **Abstract**

Disclosed is a pulsed laser system, comprising a pulsed laser to generate a train of pulses at a pulse repetition rate; and two programable pulse picking devices connected in series.

## Description

### Field of the invention

The present disclosure relates generally to a pulsed laser system. More specifically, the present disclosure relates to a pulse picking device to provide a pulsed laser system. Most specifically, the present disclosure relates to a pulsed laser system having two programable pulse picking devices connected in series.

### Background

Laser pulse picking is a widely used concept to decrease the pulse repetition rate or to create bursts by selecting individual pulses from an initial pulse train with a fixed pulse repetition rate.

Pulsed laser systems using laser pulse picking devices or pulse pickers are known in the field. It is widely known that pulse picking enables control of the temporal pulse separation.

Typically, the laser pulse contrast ratio of pulse pickers based on acousto- or electro-optic modulators is limited to values of the order of 100:1 for adjacent and 10⁴:1 for nonadjacent pulses.

However, in applications such as fluorescence lifetime imaging microscopy (FLIM), undesired residual pulses during the off-state can excite the fluorophores partially, create a background signal, and thus deteriorate the signal-to-noise ratio.

Accordingly, there has been a desire to suppress these undesired residual pulses.

One solution to suppress undesired residual pulses is to use cascading pulse pickers.

This, however, comes at a cost of electronic complexity, a decrease of the overall transmission efficiency and further narrowing of the spectral operating range due to physical limitations of crystal material transparency, optical coatings, and modulation efficiency.

To overcome these problems, a device using a fiber-feedback optical parametric oscillator (FFOPO) has been reported by M. Floess et al. in "Femtosecond tunable light source with variable repetition rate between 640 kHz and 41 MHz with a 130 dB temporal pulse contrast ratio," Opt. Express 30, 1-11 (2022).

The FFOPO as disclosed by M. Floess et al. enhances the contrast performance of a conventional pulse picker by 9 orders of magnitude in an alloptical manner, whilst offering wavelength tunability with unaltered picking performance.

As described in the article, that system is suitable for applications such as nonlinear microscopy, and FLIM, and enables access to a large fluorophore lifetime range. Furthermore, it can also be used as front-end system for highenergy laser systems, as it would provide an extremely high laser pulse contrast ratio already at the front of the amplification chain.

However, the FFOPO is a rather complex device including a MgO:PPLN crystal with 9 discrete grating periods to provide a nonlinear medium, a linear cavity design using a polarizing beam splitter in combination with a quarterwaveplate for variable output coupling. The FFOPO need to be controlled in a very complex manner, and all of the components for the FFOPO are rather costly.

Further, the linear cavity incorporates a 160-m long fiber, which is very sensitive to thermal expansion that causes an effective change of the cavity length and thus a wavelength change.

Accordingly, there is a need for providing a pulse picking device that is non-complex, simple to use, low-cost, stable to temperature changes, while at the same time provides a contrast ratio for adjacent pulses that outperforms a typical setup of a conventional pulse pickers in cascade, for example using 3 or 4 or more pulse pickers in series.

### Summary

It is an objective of this disclosure to provide a pulse picking device that overcomes the problems of the prior art.

Further, it is an objective of this disclosure to provide a pulse picking device that is non-complex, simple to use, low-cost, stable to temperature changes.

Even further, it is an objective of this disclosure to provide a pulse picking device that can provide a contrast that outperforms a typical setup of a conventional pulse pickers in cascade, for example using 3 or 4 or more pulse pickers in series.

These and other objectives have been solved by the pulse picking device as defined in the claims and as described below in the present disclosure.

In one aspect of the disclosure, there is disclosed a pulsed laser system, comprising: a pulsed laser to generate a train of pulses at a pulse repetition rate; two programable pulse picking devices connected in series. The two programable pulse picking devices comprise a first programmable pulse picker device configured for suppressing some of the pulses by operating the suppression at a first pulse-suppression repetition rate after a first delay, such that after the suppression, the train of pulses comprises desired pulses with a first desired power and unwanted pulses with a first unwanted power; and a second programmable pulse picker configured for further suppressing the unwanted pulses by operating the suppression at a second pulse-suppression repetition rate after a second delay, such that after the further suppression, the train of pulses comprises the desired pulses with a second desired power and the unwanted pulses with a second unwanted power. The first delay and the second delay are configured to be different.

It has been found that when the first delay is configured to be different from the second delay, then the unwanted pulses with a second unwanted power is reduced more than if the second delay was configured to be identical to the first delay.

Thus, the present disclosure provides a system that is more efficient than that of the prior art. By only using two pulse pickers instead of more, the presently disclosed system is also a low-cost solution, which at the same time also does not sacrifice power - as a solution with more pulse pickers would do.

In one embodiment of the system, the first delay and the second delay are defined in relation to a trigger point. The trigger point may for example be set by the pulsed laser or a controller thereof. Accordingly, a controller may be configured to both control the pulsed laser and the two programable pulse picking devices. According to the present disclosure, the two programable pulse picking devices are connected in series. This means that the train of pulses first enters the first pulse picking device, and then thereafter enters the second pulse picking device. The two pulse picking devices are accordingly understood to be two cascading pulse pickers.

In a second aspect of the disclosure is provided a system for material processing comprising the system of the first aspect. The inventor of the present disclosure has found that the present system of the first aspect can provide an extremely high laser pulse contrast ratio, whereby it is an ideal candidate for material processing.

Accordingly, the second aspect provides a system for material processing, comprising a pulsed laser system, wherein the pulsed laser system comprises: a pulsed laser to generate a train of pulses at a pulse repetition rate; two programable pulse picking devices connected in series. The two programable pulse picking devices comprise a first programmable pulse picker device configured for suppressing some of the pulses by operating the suppression at a first pulse-suppression repetition rate after a first delay, such that after the suppression, the train of pulses comprises desired pulses with a first desired power and unwanted pulses with a first unwanted power; and a second programmable pulse picker configured for further suppressing the unwanted pulses by operating the suppression at a second pulse-suppression repetition rate after a second delay, such that after the further suppression, the train of pulses comprises the desired pulses with a second desired power and the unwanted pulses with a second unwanted power. The first delay and the second delay are configured to be different.

In a third aspect of the disclosure is provided a system for fluorescence comprising the system of the first aspect. The system for fluorescence may for example be used in a microscopy using fluorescence lifetime imaging microscopy (FLIM). The inventor of the present disclosure has found that the present system of the first aspect can avoid creating undesired residual pulses during an off-duty cycle, which could excite fluorophores partially, create a background signal, and thus deteriorate the signal-to-noise ratio. Thus, the inventor has found that the system of the first aspect is an ideal candidate for a system for fluorescence.

Accordingly, the third aspect provides a system for fluorescence, comprising a pulsed laser system, wherein the pulsed laser system comprises: a pulsed laser to generate a train of pulses at a pulse repetition rate; two programable pulse picking devices connected in series. The two programable pulse picking devices comprise a first programmable pulse picker device configured for suppressing some of the pulses by operating the suppression at a first pulse-suppression repetition rate after a first delay, such that after the suppression, the train of pulses comprises desired pulses with a first desired power and unwanted pulses with a first unwanted power; and a second programmable pulse picker configured for further suppressing the unwanted pulses by operating the suppression at a second pulse-suppression repetition rate after a second delay, such that after the further suppression, the train of pulses comprises the desired pulses with a second desired power and the unwanted pulses with a second unwanted power. The first delay and the second delay are configured to be different.

In a fourth aspect of the disclosure is provided a system for eye surgery comprising the system of the first aspect. The inventor of the present disclosure has found that the present system of the first aspect can avoid creating undesired residual pulses during an off-duty cycle, which could damage tissue during eye surgery, and thus create more damage than surgery to a patient. Thus, the inventor has found that the system of the first aspect is an ideal candidate for a system for eye surgery.

Accordingly, the fourth aspect provides a system for eye surgery, comprising a pulsed laser system, wherein the pulsed laser system comprises: a pulsed laser to generate a train of pulses at a pulse repetition rate; two programable pulse picking devices connected in series. The two programable pulse picking devices comprise a first programmable pulse picker device configured for suppressing some of the pulses by operating the suppression at a first pulse-suppression repetition rate after a first delay, such that after the suppression, the train of pulses comprises desired pulses with a first desired power and unwanted pulses with a first unwanted power; and a second programmable pulse picker configured for further suppressing the unwanted pulses by operating the suppression at a second pulse-suppression repetition rate after a second delay, such that after the further suppression, the train of pulses comprises the desired pulses with a second desired power and the unwanted pulses with a second unwanted power. The first delay and the second delay are configured to be different.

### Brief description of the drawings

The above and/or additional objects, features and advantages of the present disclosure, will be further described by the following illustrative and non-limiting detailed description of embodiments of the present disclosure, with reference to the appended drawing(s), wherein:
**Fig. 1** shows an example of an operation of a pulsed laser system according to prior art.
**Fig. 2** shows an example of an operation of a pulsed laser system according to the present disclosure.

### Detailed description

### Pulsed laser system

In one embodiment, the pulsed laser is a femto-second laser. Such a laser may be well suited for material processing or eye-surgery.

In another embodiment, the pulsed laser is a seed laser used in combination with a non-linear fiber to generate super-continuum pulses having a broad spectrum, such that the two pulse-picker devices suppress unwanted supercontinuum pulses. Such a laser may clearly be used for a system for generating super-continuum. A supercontinuum system as here disclosed may for example be used for illumination in a microscope system, or for a fluorescence system, such as in a microscope system using fluorescence lifetime imaging microscopy (FLIM).

In yet another embodiment, the pulsed laser is a pico-second laser. Such a laser may for example be well suited for providing ultrafast lasers and applications of such.

### Pulse-suppression repetition rate(s) and pulse repetition rate

In a preferred embodiment, the pulse picking devices are synchronized to the pulsed laser. This may ensure that the pulse-picking devices are triggered by the same pulses, particularly as generated by the pulsed laser, and particularly the unwanted pulses with the first and second unwanted power. In one embodiment, the first pulse-suppression repetition rate and the second pulse-suppression repetition rate are identical. Preferably, the first pulse-suppression rate and the second pulse-suppression rate are identical to the pulse repetition rate, thereby synchronized to the pulsed laser. However, in another embodiment the first pulse-suppression rate and the second pulse-suppression rate are different from to the pulse repetition rate, thereby synchronized to the pulsed laser. For example, the first pulse-suppression rate and the second pulse-suppression rate may be a ratio, 1/n, of the pulse repetition rate, where n is a natural number, such as n=2, n=3, n=4, etc. The first pulse suppression-rate and the second pulse suppression-rate, or rather the delays thereof, as previously described, may be triggered in relation to a trigger point. The trigger point may for example be set by the pulsed laser or a controller thereof. The trigger point may typically be a clock point. by synchronization as described above, the suppression is the most efficient and stable in time. In some embodiments, the two pulse-picking devices are not triggered, or synchronized to the same pulses from the pulsed laser. It may for example be possible to synchronize the first pulse picking device to the pulsed laser and synchronize the second pulse picking device to the first pulse picking device, or the other way around. Generally stated, the first and second pulse picking devices may be configured to have respective delays that are adjusted relative to one or more input trigger signal(s) and/or input trigger point(s).

For example, the second delay may differ from the first delay by between 1 and 10 ns relative to one or more input trigger point.

In most embodiments, the pulse repetition rate is in the range of 5 to 150 MHz. Accordingly, the pulse-suppression repetition rate may in some embodiments be in the same range. This means that the pulse picking devices may be configured to operate with pulse-suppression repetition rates of 5 to 150 MHz, and thereby transmit pulse trains with repetition rates equal to or lower than that, typically 0.1-75MHz

### Delay(s) and power(s)

In one embodiment, the first delay is set to a value which maximizes transmission but preferentially suppresses either the leading edge or trailing edge of the pulse train. The delay may in such an embodiment be between 1 and 25 ns. The second pulse picker delay is chosen to preferentially suppress the opposite part of the pulse train such that there is applied preferential suppression on both the leading and trailing edges of the optical pulses.

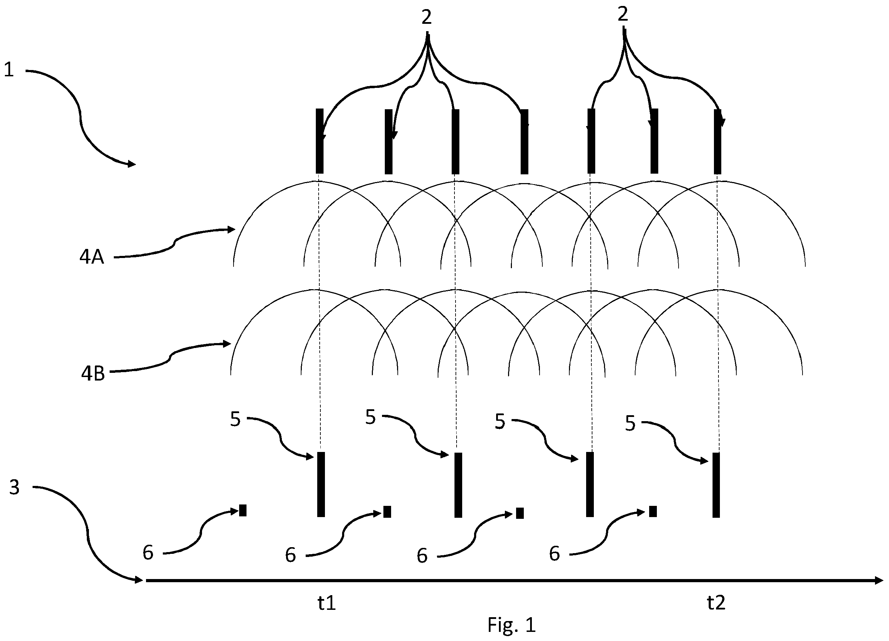

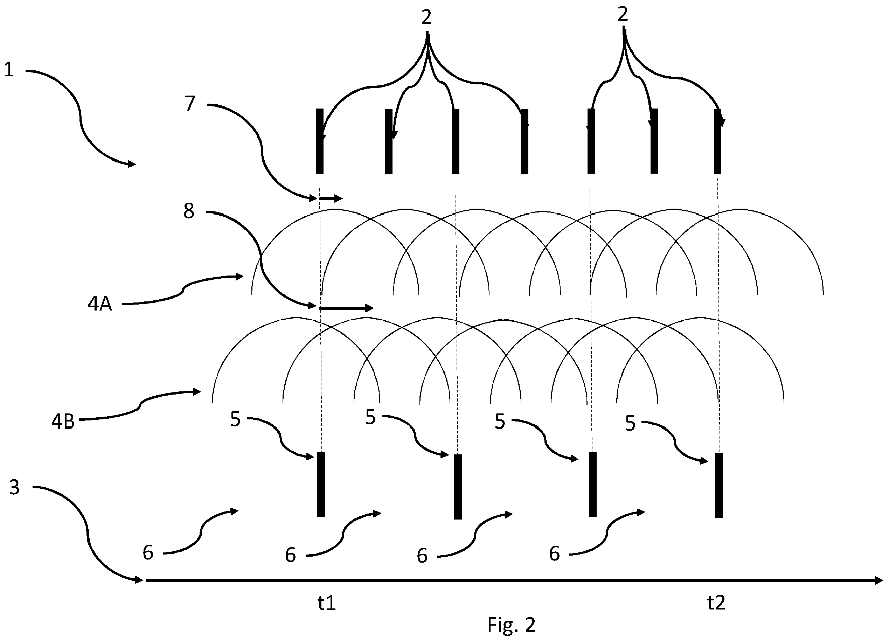

As previously described, the first delay may be defined in relation to a trigger point, for example set by the pulsed laser or a controller thereof. The trigger point may for example coincide with the time where the pulsed laser provides a maximum desired pulse. The delay may then be such that the suppression of the first pulse picking device has its minimum suppression close (as defined by the delay) to the time where the pulsed laser provides the desired pulse. When the pulse picking device provides its minimum suppression, it allows light to pass through the device. At minimum suppression, the pulse picking device may be at its apex of an opening and closing function, where open means that maximum light will pass through the device. The concept of the opening and closing function will be explained in both Example 1 and 2 with references to Figures 1 and 2.

For example, in one embodiment, a ratio between the first desired power and the second unwanted power is larger than 100, such as around 1000, or more than 1000.

### Programable pulse picking devices

In one embodiment, the two programable pulse picking devices are of the same type. For example, the two programable pulse picking devices may be two acousto-optical modulators (AOMs).

### Example 1 - Prior art

**Fig. 1** shows an example an operation of a pulsed laser system **1** according to prior art. **Fig. 1** is shown and explained in this example for comparative reasons and thereby in relation to the presently disclosed system as will be presented in Example 2 and **Fig. 2****.**

The pulsed laser system **1** comprises a pulsed laser (not shown) to generate a train of pulses **2** at a pulse repetition rate. The pulse repetition rate is indicated by having the train of pulses **2** separated in time. In other words, **Fig. 1** shows the generation of the train of pulses over time, and thus that that the axis indicates a time axis **3.** In this particular example, seven pulses within the train of pulses **2** are shown in a given time, from **t1** to **t2,** as shown on the time axis **3.** The pulsed laser system **1** further comprises two programable pulse picking devices (not shown) connected in series. The two programable pulse picking devices are not shown, but instead the pulse suppression (over time), as indicated by a plurality of opening and closing functions **4A** and **4B,** are shown. As can be seen from **Fig. 1**, a programmable pulse picking device allows light to pass through by effectively opening and closing the light transmission. The programmable pulse picking device operates by opening and closing for the light transmission over time. The time between being open (at the apex of the opening and closing function **4A** and **4B**) and being closed (at the base of the opening and closing function **4A** and **4B**) is measurable and non-instantaneous. Although the two programable pulse picking devices are not shown, it is clear from **Fig. 1** that the two programable pulse picking devices are connected in series in that they operate on the pulses (over time), one after another. The two programable pulse picking devices comprises a first programmable pulse picker device configured for suppressing some of the pulses by operating the suppression at a first pulse-suppression repetition rate, such that after the suppression, the train of pulses **2** comprises desired pulses **5** with a first desired power and unwanted pulses **6** with a first unwanted power; and a second programmable pulse picker configured for further suppressing the unwanted pulses **5** by operating the suppression at the first pulse-suppression repetition rate, such that after the further suppression, the train of pulses **2** comprises the desired pulses **5** with a second desired power and the unwanted pulses **6** with a second unwanted power.

The unwanted power of the unwanted pulses **6** in a setup according to the prior art is measurable, and may, dependent on the application, be of great disadvantage.

### Example 2 - A pulsed laser system according to the present disclosure

**Fig. 2** shows an example of an embodiment of the pulsed laser system **1** according to the present disclosure.

The pulsed laser system **1** comprises a pulsed laser (not shown) to generate a train of pulses **2** at a pulse repetition rate. The pulse repetition rate is indicated by having the train of pulses **2** separated in time. In other words, **Fig. 2** shows the generation of the train of pulses over time, and thus that that the axis indicates a time axis **3**. In this particular example, seven pulses within the train of pulses **2** are shown in a given time, from **t1** to **t2,** as shown on the time axis **3**. The pulsed laser system **1** further comprises two programable pulse picking devices (not shown) connected in series. The two programable pulse picking devices are not shown, but instead the pulse suppression (over time), as indicated by a plurality of opening and closing functions **4A** and **4B,** are shown. As can be seen from **Fig. 2****,** a programmable pulse picking device allows light to pass through by effectively opening and closing the light transmission. The programmable pulse picking device operates by opening and closing for the light transmission over time. The time between being open (at the apex of the opening and closing function **4A** and **4B)** and being closed (at the base of the opening and closing function **4A** and **4B)** is measurable and non-instantaneous. Although the two programable pulse picking devices are not shown, it is clear from **Fig. 2** that the two programable pulse picking devices are connected in series in that they operate on the pulses (over time), one after another. The two programable pulse picking devices comprises a first programmable pulse picker device configured for suppressing some of the pulses by operating the suppression at a first pulse-suppression repetition rate after a first delay **7,** such that after the suppression, the train of pulses **2** comprises desired pulses **5** with a first desired power and unwanted pulses **6** with a first unwanted power; and a second programmable pulse picker configured for further suppressing the unwanted pulses **5** by operating the suppression at a second pulse-suppression repetition rate after a second delay **8**, such that after the further suppression, the train of pulses **2** comprises the desired pulses **5** with a second desired power and the unwanted pulses **6** with a second unwanted power. Due to the introduced time delays, **7** and **8,** the unwanted pulses **6** have very weak power, and therefore they are not shown in **Fig. 2****.**

As can be seen by comparison with **Fig. 1** in Example 1, the present example, and thus the present disclosure, differs from **Fig. 1** and thus from the prior art, in that the first pulse suppression is delayed by the first delay **7,** and the second pulse suppression is delayed by the second delay **8**. Moreover, the first delay **7** and the second delay **8** are configured to be different.

As described, the delays, **7** and **8**, are responsible for suppressing the unwanted pulses more efficiently than if the delays are not present.

More specifically, as can be seen from **Fig. 2****,** and by comparison with **Fig. 1**, the first delay **7** is responsible for introducing a higher loss for an unwanted pulse, and thus a lower loss for a desired pulse, whereas the second delay **8** is responsible for introducing a lower loss for an unwanted pulse, and thus a higher loss for a desired pulse. Effectively, when combined, the loss for the unwanted pulses **6** is higher than if the delay is not present, and therefore the delay has a technical effect of reducing the power of the unwanted pulses as is the objective of the present disclosure.

In the present example, as can be seen from **Fig. 2**, the first pulse-suppression repetition rate and the second pulse-suppression repetition rate are identical. They only differ by the delay. Furthermore, as can also be seen from **Fig. 2**, the first pulse-suppression repetition rate and the second pulse-suppression repetition rate are identical to the pulse repetition rate.

## Claims

1. A pulsed laser system, comprising:
- a pulsed laser to generate a train of pulses at a pulse repetition rate;
- two programable pulse picking devices connected in series, comprising:
∘ a first programmable pulse picker device configured for suppressing some of the pulses by operating the suppression at a first pulse-suppression repetition rate after a first delay, such that after the suppression, the train of pulses comprises desired pulses with a first desired power and unwanted pulses with a first unwanted power; and
∘ a second programmable pulse picker configured for further suppressing the unwanted pulses by operating the suppression at a second pulse-suppression repetition rate after a second delay, such that after the further suppression, the train of pulses comprises the desired pulses with a second desired power and the unwanted pulses with a second unwanted power;
wherein the first delay and the second delay are configured to be different.

2. The pulsed laser system according to claim 1, wherein the pulsed laser is a seed laser used in combination with a non-linear fiber to generate super-continuum pulses having a broad spectrum, such that the two pulse-picker devices suppress unwanted super-continuum pulses.

3. The pulsed laser system according to claim 1, wherein the pulsed laser is a femto-second laser.

4. The pulsed laser system according to any of the preceding claims, wherein the first pulse-suppression repetition rate and the second pulse-suppression repetition rate are identical.

5. The pulsed laser system according to claim 4, wherein the first pulse-suppression repetition rate and the second pulse-suppression repetition rate are identical to the pulse repetition rate.

6. The pulsed laser system according to any of the preceding claims, wherein the pulse repetition rate is in the range of 5 to 150 MHz.

7. The pulsed laser system according to any of the preceding claims, wherein the first delay is set to between 1 and 25 ns.

8. The pulsed laser system according to any of the preceding claims, wherein the second delay differs from the first delay by between 1 and 10 ns relative to a trigger point.

9. The pulsed laser system according to any of the preceding claims, wherein a ratio between the first desired power and the second unwanted power is larger than 100.

10. The pulsed laser system according to any of the preceding claims, wherein two programable pulse picking devices are of the same type.

11. The pulsed laser system according to claim 11, wherein the two programable pulse picking devices are two acousto-optical modulators (AOMs).

12. A system for material processing comprising the system of claim 1.

13. A system for generating super-continuum comprising the system of claim 1 and 2.

14. A system for fluorescence comprising the system of claim 1.

15. A system for eye surgery comprising the system of claim 1.
